(19) Europäisches Patentamt
European Patent Office
Office européen des brevets

(11) Publication number: **0 260 827 A2**

# (12) EUROPEAN PATENT APPLICATION

(21) Application number: **87307472.8**

(51) Int. Cl.[4]: **C09D 3/80**

(22) Date of filing: **24.08.87**

(30) Priority: **18.09.86 EP 86402047**

(43) Date of publication of application: **23.03.88 Bulletin 88/12**

(84) Designated Contracting States: **BE DE ES FR GB IT LU NL**

(71) Applicant: **IMPERIAL CHEMICAL INDUSTRIES PLC**
**Imperial Chemical House Millbank**
**London SW1P 3JF(GB)**

Applicant: **HOLDEN EUROPE SA**
**182, Rue Ludovic Becquet BP 27**
**F-76320 St.-Pierre-les-Elbeuf(FR)**

(72) Inventor: **Dyer, David**
**71, Halkingcroft**
**Langley Slough(GB)**
Inventor: **Metcalfe, Ronald**
**164a Rue de la Haline**
**F-76320 St-Pierre-les-Elbeuf(FR)**

(74) Representative: **Johnston, Walter Paul et al**
**Imperial Chemical Industries PLC Legal Department: Patents PO Box 6**
**Welwyn Garden City Herts, AL7 1HD(GB)**

## (54) Coating compositions.

(57) This invention provides a coating composition comprising a binder and an aqueous carrier, the binder comprising from 70-90% by weight of a sterically stabilised dispersion of a thermosetting acrylic polymer, an amount being in the range 2-30% by weight of a bisphenol-A epichlorhydrin condensate or novolac epoxy resin provided that the amount is below that which causes instability of the dispersion, and from 0.1 to 10% by weight of an acid catalyst based on the total binder, where the steric stabilising agent is polyvinyl pyrrolidone having a molecular weight of 2,000 - 500,000.

EP 0 260 827 A2

# COATING COMPOSITIONS

This invention relates to coating compositions, a process for their preparation and their use in particular, as coatings for food and drink containers.

British Patent No. GB-A-2 039 497 discloses and claims a process for preparing sterically stabilised dispersions of polymer microparticles having a particle size in the range 0.1 - 10 microns by the free radical-initiated polymerisation of ethylenically unsaturated monomers in the presence of a steric stabiliser.

In European Patent Application EP-A-0 130 686, there is disclosed a washcoat composition suitable for application to tin-plated mild steel and comprising a sterically stabilised dispersion in an aqueous medium of thermosetting acrylic polymer particles, an epoxy resin and an acid catalyst.

We have now discovered certain novel coating compositions that can be used for example, on food and drink containers that are surprisingly resistant to degradation by steam sterilisation.

Accordingly, the present invention provides a coating composition comprising a binder and an aqueous carrier, the binder comprising from 70 - 98% by weight of a sterically stabilised dispersion of a thermosetting acrylic polymer, an amount being in the range 2 - 30% by weight of a bisphenol-A epichlorhydrin condensate or novolac epoxy resin, provided that the amount is below that which causes instability of the dispersion, and from 0.1 to 10% by weight of an acid catalyst based on total binder, where the steric stabilising agent is polyvinyl pyrrolidone having a molecular weight in the range 2,000 to 500,000.

In the specification, the term "acrylic polymer" means a polymer or copolymer containing units derived from acrylic or methacrylic acid alkyl esters (these alkyl esters being straight or branched chain) and optionally containing other units derived from ethylenically unsaturated monomers.

Examples of alkyl esters of acrylic or methacrylic acid alkyl esters from which the polymer or copolymer units are derived are methyl methacrylate, ethyl methacrylate, propyl methacrylate, butyl methacrylate, pentyl methacrylate, hexyl methacrylate, dodecyl methacrylate, ethyl acrylate, propyl acrylate, butyl acrylate, pentyl acrylate, hexyl acrylate, octyl acrylate, 2-ethylhexylacrylate and dodecyl acrylate.

Examples of ethylenically unsaturated monomers from which the optional units can be derived are acrylic acid, methacrylic acid, acrylonitrile, methacrylonitrile, acrylamide, methacrylamide and vinyl monomers in particular styrene, vinyl toluene, vinyl acetate, vinyl chloride and vinylidene chloride.

The acrylic polymer is thermosetting, and contains groups which are capable of undergoing cross-linking on stoving after the composition has been applied. The cross-linking may occur with an external cross-linking agent, or cross-linking capacity can be built into the acrylic polymer.

For cross-linking with an external cross-linking agent, the acrylic polymer contains units having free hydroxyl or carboxyl groups. Such units are derived from acrylic acid, methacrylic acid and hydroxyalkyl esters of acrylic and methacrylic acid, particularly hydroxy $C_{1-6}$ alkyl esters of acrylic and methacrylic acid, for example, hydroxyethyl acrylate, hydroxy-n-propylacrylate, hydroxy-isopropylacrylate, hydroxy-n-butylacrylate, hydroxyethylmethacrylate, hydroxy-n-propylmethacrylate, hydroxy-isopropylmethacrylate, hydroxy-n-butylmethacrylate.

The external cross-linking agent can be the epoxy resin or a conventional cross-linking agent for example, melamine-formaldehyde condensate.

The cross-linking capacity can be built into the acrylic polymer by incorporating comonomer-derived units which can generate cross-links with themselves or co-reactive groups in the polymer under the influence of an acid catalyst. Units that generate cross-links under acid catalysis are in particular derived from blocked amide-containing monomers, where the blocking group is acid labile. Examples of such blocking groups are N-alkoxymethylamide groups especially N-$C_{1-6}$ alkoxy methylamide groups in particular N-methoxymethylamide, N-ethoxymethylamide, N-propoxymethylamide, N-butoxy-methylamide and N-isobutoxymethylamide.

Examples of monomers containing such blocked amide groups are N-alkoxyalkylacrylamides and N-alkoxy alkylmethacrylamides particularly the N-alkoxylalkyl derivatives listed above, of acrylamide and methacrylamide.

Preferably the acrylic polymer has a monomer composition of methylmethacrylate/butyl acrylate/N-butoxymethylacrylamide/methacrylic acid in the weight ratios 44.8/39.1/13.3/2.8 respectively. Epoxy resins suitable for use in this invention are conventional bisphenol-A-epichlorhydrin condensates possessing unreacted epoxide groups and having the general formula:-

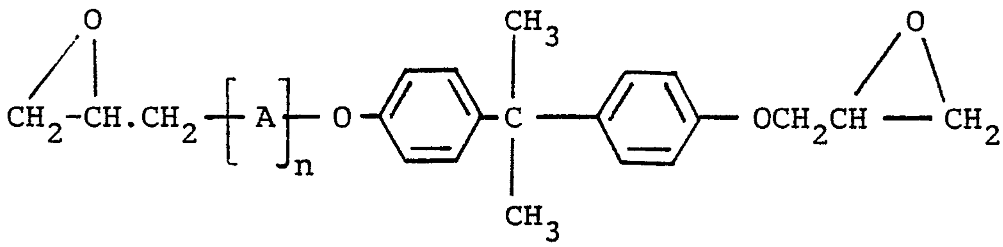

where A is

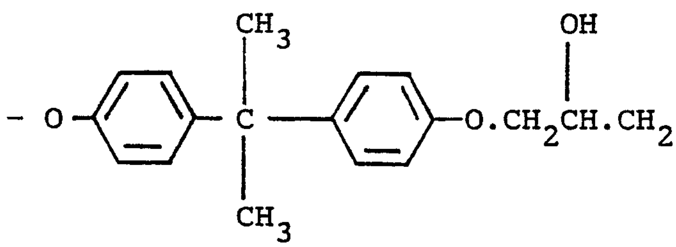

and where n may have any value from zero up to about 12.

Epoxy resins of this type are available commercially. Examples are the "Epikote" range supplied by Shell Chemicals. ("Epikote" is a Registered Trade Mark.) Examples of "Epikote" resins that can be used in the present invention are "Epikote 1001" and "Epikote 1004". These resins have the general formula above, where n is approximately 2 and 3.7 respectively. Preferably the resin is "Epikote 828". In this resin, n is approximately 0.1. Other suitable epoxy resins are epoxy-novolac resins, for example, EPN 1139 supplied by Ciba-Geigy or DER 439 supplied by Dow Chemicals.

The amount of epoxy resin in the composition will not exceed 30% by weight. However, the maximum amount that can be included depends on the grade of expoxy resin used. For higher molecular weight resins (for example, bisphenol-A-epichlorhydrin resins referred to above where n is more than 3) the amount will , in general, be less than 30% by weight. The precise amount to be used in any particular case can be determined by a simple experiment. That is the amount of epoxy resin employed in the process described herein is such as to cause neither flocculation of the dispersion nor precipitates from the continuous phase.

The molecular weight of the polyvinyl pyrrolidone can be in the range 2,000 to 500,000. Preferably it is 20,000 to 60,000.

Polyvinyl pyrrolidone of this type is commercially available from the GAF Corporation.

Examples of acid catalysts for use in this invention are phosphoric acid, chromic acid and their ammonium salts and amine salts, in particular salts with alkanolamines especially N,N-dimethylaminoethanol; mixtures of phosphoric acid and chromium trifluoride of composition $H_3PO_4:CrF_3.4H_2O$ in the weight ratio of 3.2.

Preferably the acid catalyst is phosphoric acid.

Preferably the binder contains from 80 to 95% by weight of the acrylic polymer and from 2 to 20% by weight of polyvinyl pyrrolidone and from 2 to 20% by weight of the epoxy resin.

Preferably the acid catalyst is from 0.1 to 5% by weight of total binder.

Optionally, the compositions of this invention can also contain minor proportions of other ingredients, for example, surfactants, thickeners and slip aids. A suitable surfactant is sodium dioctylsulphosuccinate, used at a level of about 0.01% to 0.5% solids (based on the total weight of the composition). Suitable thickeners, preferably of the non-ionic type, include "Primal" RM8 ("Primal" is a Registered Trade Mark) and guar gum, these being used at a level of about 0.01% - 0.1% (on the same basis).

The presence of these materials assists the wetting of the substrate by the composition and the production of an unbroken film over the whole of the surface to be coated, but the amounts used should be kept at a minimum consistent with achieving these objectives, otherwise resistance to water or steam of the final coating may be impaired.

Suitable slip aids are aqueous dispersions of hydrocarbon waxes, of which "Lanco Glidd" W (ex. Capricorn Chemicals; "Lanco Glidd" is a Registered Trade Mark) may be mentioned as an example.

Alternatively, the compositions of this invention can be blended with commercially available polymers, for example, polyethylene/carboxylic acid polymers especially those sold under the trade mark "Primacor". Blends of "Primacor" have relatively improved flexibility and superior adhesion to aluminium. The composition of this invention can be blended with "Primacor" in a range of proportions, typically from 1 part of "Primacor" to 2 parts of the composition of the invention to 2 parts of "Primacor" to 1 part of this invention. Preferably it is a 1:1 blend.

The coating compositions of the invention can be prepared by adding the epoxy resin and the acid catalyst to the sterically stabilised aqueous dispersion of thermosetting acrylic polymer.

The aqueous dispersion of polymer can be prepared by a process which comprises the free radical polymerisation of monomers with 0.5 to 10% organic peroxide on monomers in an aqueous medium, which medium comprises at least 30% by weight of water and up to 70% by weight of a second water-miscible constituent, the medium as a whole being capable of dissolving the monomers to the extent of at least 3% by weight while being nonsolvent for the polymer formed, the polymerisation being carried out at a temperature which is at least 10°C higher than the Tg of the polymer, in the presence of 2 to 30% on solids ofpolyvinylpyrrolidone of molecular weight 2,000 to 500,000 as a steric stabiliser, the monomer in the polymerisation mixture being maintained throughout at a level such that at no time does the free monomer form a separate phase.

The aqueous medium employed in the above described polymerisation procedure is a mixture comprising at least 30% by weight of water and not more than 70% by weight of a second constituent which is miscible with water, the nature and proportion of the second constituent being such that the aqueous medium as a whole is capable of dissolving the monomer mixture to the extent of at least 3% by weight but is a non-solvent for the polymer formed.

The term "aqueous medium" thus embraces media where the water is not the major constituent.

Preferably, as high a proportion of water as possible is employed, consistent with the aqueous medium being capable of dissolving the monomer mixture at least to a sufficient extent to avoid the existence of a separate monomer phase.

Substances which are suitable as the second, water-miscible constituent of the aqueous medium include in particular, diethyleneglycol, $C_{1-4}$ alkyl mono-ethers of $C_{2-6}$ glycols for example methoxypropanol and $C_{1-4}$ alkanols for example, methanol and ethanol, preferably it is ethanol.

Preferably the temperature of polymerisation of the monomer mixture is at least 20°C, more preferably at least 30°C, higher than the Tg of the polymer which is to be formed.

This process is described in general terms in British Patent Application GB-A-2039497 and the term Tg above is defined accordingly.

The compositions of this invention can be used to coat food and drink containers, for example glass bottles and cans, or metal feedstock e.g. metal coil or sheet from which such cans can be manufactured.

The compositions can be applied by standard methods, for example by spraying, curtain or roller coating, dipping or spreading. The thickness of the coating depends upon the purpose for which it is applied. For example, if the coating is to be used as a primer, it is applied at 1 to 2 $g.m^{-2}$ and giving a thickness of about 1 to 2 microns. For a varnish, particularly for an overprint varnish, the coating is applied at 4 to $5g.m^{-2}$.

After application, the coated article is stoved to bring about cross-linking. The temperature and duration of stoving depends upon the end use. For example it can be about 200 C for 2-3 minutes for internal lacquers in drinks containers.

The invention is illustrated by the following Examples:

EXAMPLE 1

The following four charges A to D were made up:-

| | |
|---|---|
| Charge A Distilled water | 1050.1 parts |
| Ethanol | 949.3 parts |
| Polyvinyl pyrrolidone - grade K30 molecular weight about 40,000 | 94.0 parts |

Charge B Methyl methacrylate 54.4 parts
Butyl acrylate 55.3 parts
Benzoyl Peroxide (60% in dimethyl phthalate) 5.5 parts

Charge C Methyl methacrylate 414.3 parts
Butyl acrylate 355.1 parts
N-Butoxymethylacrylamide 227.2 parts
(60% solution in butanol)
Methacrylic acid 28.6 parts
Benzoyl peroxide (60% in dimethyl-phthalate) 37.1 parts

Charge D Methyl methacrylate 37.8 parts
Butyl acrylate 31.6 parts
N-Butoxymethylacrylamide 24.4 parts
(60% solution in butanol)
Methacrylic acid 2.6 parts
Epikote 828 (ex Shell Chemical Co.) 125.6 parts
Azodiisobutyronitrile 3.0 parts

Charge A was heated to 50 C in an inert atmosphere and charge B was added to it quickly. The Charge A, Charge B mixture as heated under reflux (81°C) with stirring for 30 minutes during which time a seed polymer dispersion was formed.

Charge C was added dropwise with stirring over 3 hours and Charge D was subsequently added dropwise to the returning distillate over 1 hour to the seed polymer dispersion while the dispersion was being heated under reflux.

Thirty minutes after the addition of Charge D had been completed, azodiisobutyronitrile (1.6 parts) was slurried in a portion (10 parts) of the returning distillate and was added to the mixture being heated under reflux. After a further 30 minutes, a further portion (1.6 parts) of azodiisobutyronitrile was added to the mixture in the same way.

After a further 30 minutes, the ethanol was removed by distillation at atmospheric pressure to yield a stable aqueous dispersion, the disperse phase of which had the weight composition methylmethacrylate / butylacrylate / N-butoxymethylacrylamide / methacrylic acid / Epikote 828 / polyvinylpyrrolidone 44.8/39.1/13.3/ 2.8/11/8.3 respectively.

The dispersion had a particle size of 0.345 microns (measured by the "Nanosizer" instrument sold by Coulter Electronics Limited. Nanosizer is a Registered Trade Mark).

EXAMPLE 2 A dispersion was made by the procedure of Example 1 using polyvinylpyrrolidone PVPK15 (molecular weight 10,000) in place of PVPK30. The particle size of the dispersion so obtained was 2.11 microns.

EXAMPLE 3 A dispersion was made by the procedure of Example 1 using polyvinylpyrrolidone PVPK60 (molecular weight 160,000) in place of PVPK30. The particle size of the dispersion was 0.447 microns.

EXAMPLE 4 A dispersion was made by the procedure of Example 1 using polyvinylpyrrolidone PVPK90 (molecular weight 360,000) in place of PVPK30. Ethanol/water was added during preparation to decrease viscosity. The particle size of the dispersion was 1.3 microns.

EXAMPLE 5 The following three charges were made up:-

| | |
|---|---|
| Charge A Distilled water | 732.50 parts |
| Ethanol | 366.25 parts |
| Methoxypropanol | 366.25 parts |
| Polyvinyl pyrrolidone PVPK30 molecular weight about 40,000 | 90.20 parts |

| | |
|---|---|
| Charge B Butyl acrylate | 45 parts |
| Methyl methacrylate | 45 parts |
| Benzoyl peroxide (75% damped with water) | 6 parts |

| | |
|---|---|
| Charge C Methyl methacrylate | 318 parts |
| Butyl acrylate | 272 parts |
| N-isobutoxymethylacrylamide (85% solution) | 127 parts |
| Methacrylic acid | 22.5 parts |
| Benzoyl peroxide (75% damped with water) | 32.5 parts |

Charges A to C were made up in the proportions specified. Charge A was heated up to 50°C and Charge B was added to it quickly with stirring. When the addition had been completed, the mixture of Charge A and B was heated under reflux for 30 minutes, thereafter a portion of Charge C (691 parts) was added dropwise into the returning distillate over a period of 3 hours.

When the addition had been completed, a mixture of Epikote 828 (90.1 parts) and a further portion of Charge C (81 parts) was added dropwise over 1 hour to the mixture obtained as described above. After heating for 30 minutes under reflux, peroxide initiator (Trigonox S B70, manufactured by Akzo N.V., 2.5 parts) was added, the heating was continued for a further 30 minutes, and more Trigonox SB70 (2.5 parts) was added. After heating for a further 30 minutes the solvent was removed by distillation at atmospheric pressure to yield an aqueous dispersion of polymer having the following weight composition; methylmethacrylate / butyl acrylate / N-isobutyoxymethylacrylamide / methacrylic acid / Epikote 828/PVPK30 of 44.8/39.1/13.3/2.8/11/11. The product obtained was a 37.2% solids dispersion which is stable and has a viscosity (AFNOR 4 Cup 25 C) of 45 seconds.

## EXAMPLE 6

A composition was made as described in Example 5 using a smaller amount (55.8 parts) of polyvinylpyrrolidone PVPK30 in charge A.

The weight composition of the product so obtained was methyl methacrylate / butyl acrylate / N-isobutoxymethylacrylamide / methacrylic acid / Epikote 828 / PVPK30 of 44.8/39.1/13.3/2.8/11/6.8. A stable dispersion formed which had a viscosity of 23 seconds (AFNOR 4 at 25°C) at 38.4% solids.

## EXAMPLE 7

A composition was made up by the procedure of Example 5, except that Charge C contained:-

| | |
|---|---|
| Methyl methacrylate | 237.0 parts |
| Butyl acrylate | 190.9 parts |
| Styrene | 162.1 parts |
| N-isobutoxymethylacrylamide | 127.0 parts |
| Methacrylic acid | 22.5 parts |

Benzoyl peroxide (75%) 32.5 parts

The weight composition of disperse phase obtained was methylmethacrylate / butylacrylate / styrene / N-isobutoxymethylacrylamide / methacrylic acid / Epikote 828 / PVPK30 34.8/29.1/20/13.3/2.8/11/6.8.

EXAMPLE 8

A composition was made up by the procedure of Example 7 isopropanol replacing ethanol. The product so obtained was a stable dispersion with a viscosity of 20 seconds (AFNOR 4 at 25 C) at 37.7% solids.

Comparative Example

A comparison was made of the cure potential of dispersions stabilised by polyvinylpyrrolidone and methoxypolyethyleneglycol

A dispersion was made using the procedure of Example 1 but replacing polyvinylpyrrolidone with the acrylic acid ester of the monomethylether of polyethyleneglycol (MWt. 2,000). The stabiliser was divided into two portions in the ratio 55/45. The larger portion was added in Charge B and the other in Charge C.

A dispersion was obtained in which the particle size was 0.322 microns.

A blend was made of the product prepared as described above with phosphoric acid solution (10% by weight) to give an overall concentration of 1% of phosphoric acid based on dispersion solids.

A similar blend was made up using the dispersion of Example 1 and phosphoric acid solution (10% by weight) to give an overall concentration of 1% phosphoric acid based on dispersion solids.

Coatings were applied to electrolytic tin plate as set out in the Table below and the extent of cure was assessed by the number of rubs to and fro with a hand held cloth soaked in methylethylketone that were necessary to disrupt the coating film.

| Coating | Stabiliser | MEK rubs |
|---|---|---|
| Dispersion of Ex. 1 | PVP | 15 |
| Dispersion of Ex. 1 + 1% phosphoric acid | PVP | .100 |
| Dispersion of Comparative Example | MeOPEGA | 3 |
| Dispersion of Comparative Example + 1% phosphoric acid | MeOPEGA | 15 |

PVP means polyvinylpyrrolidone

MeOPEGA means the acrylic acid ester of the monomethylether of polyethylene glycol.

**Claims**

1. A coating composition comprising a binder and an aqueous carrier, the binder comprising from 70-98% by weight of a sterically stabilised dispersion of a thermosetting acrylic polymer, an amount being in the range 2-30% by weight of a bisphenol-A epichlorhydrin condensate or novolac epoxy resin provided that the amount is below that which causes instability of the dispersion, and from 0.1 to 10% by weight of

an acid catalyst based on the total binder, where the steric stabilising agent is polyvinyl pyrrolidone having a molecular weight of 2,000 to 500,000 which has been grafted with acrylic monomers to produce a seed stage.

2. A composition as claimed in claim 1, where the polyvinylpyrrolidone has a molecular weight of 20,000 to 60,000.

3. A composition as claimed in claim 1 or claim 2, where the acrylic polymer has a monomer composition of methyl methacrylate / butylacrylate / N-butoxyethyl acrylamide / methacrylic acid in the weight ratios 44.8/39.1/13.3/2.8 respectively.

4. A composition as claimed in any one of claims 1 to 3, where the epoxy resin is of general formula:

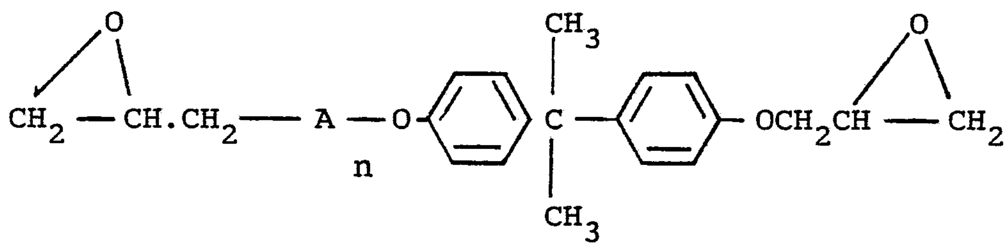

where A is

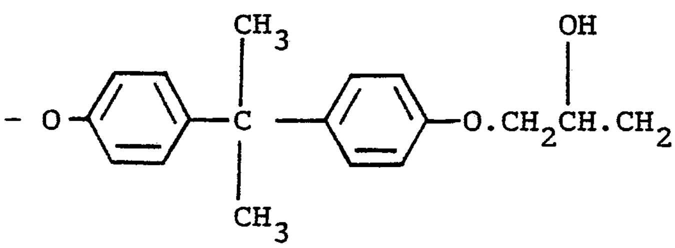

where n has a value of approximately 0.1.

5. A composition as claimed in any one of claims 1 to 4, where the binder consists of from 80% to 95% by weight of the acrylic polymer and from 2% to 20% of the epoxy resin.

6. A composition as claimed in any one of claims 1 to 5, where the acid catalyst is phosphoric acid or chromic acid or an ammonium or amine salt thereof.

7. A composition as claimed in claim 6, where the acid catalyst is present in an amount of from 0.1% to 5% of the total binder weight.

8. A process for preparing a coating composition as claimed in any one of claims 1 to 7, which comprises forming an aqueous dispersion of the acrylic polymer by free radical polymerisation of monomers in an aqueous medium, (which medium comprises at least 30% by weight of water and up to 70% by weight of a second water-miscible constituent the medium as a whole being capable of dissolving the monomers to the extent of at least 3% by weight while being a non-solvent for the polymer formed); the polymerisation is carried out at a temperature which is at least 10°C higher than the Tg of the polymer, in the presence of polyvinylpyrrolidone of molecular weight 2,000 - 5000,000 as a steric stabiliser; the monomer in the polymerisation mixture being maintained throughout at a level such that at no time does the free monomer form a separate phase; and while the dispersion is forming, adding the epoxy resin and thereafter adding the acid catalyst to the dispersion.

9. A process as claimed in claim 8, where the epoxy resin is added as the dispersion is being formed.

10. A method of coating an article which comprises applying a coating composition as claimed in any one of claims 1 to 7.